Europäisches Patentamt

European Patent Office

Office européen des brevets

(11) Publication number: **0 052 913**
**B1**

(12) **EUROPEAN PATENT SPECIFICATION**

(45) Date of publication of patent specification: **14.08.85**

(21) Application number: **81302117.7**

(22) Date of filing: **13.05.81**

(51) Int. Cl.⁴: **F 01 D 5/28, F 01 D 5/34, F 01 D 5/06**

(30) Priority: **20.11.80 JP 162706/80**

(43) Date of publication of application:
**02.06.82 Bulletin 82/22**

(45) Publication of the grant of the patent:
**14.08.85 Bulletin 85/33**

(84) Designated Contracting States:
**DE FR GB SE**

(56) References cited:
**DE-A-2 456 435**
**DE-A-2 734 747**
**DE-A-2 845 715**
**FR-A-2 300 747**
**GB-A-2 055 982**
**US-A-2 751 188**
**US-A-3 854 189**
**US-A-4 156 051**

**JAPANESE PATENTS ABSTRACTS, vol. 4, no. 176, December 5, 1980 (M-45) (658)**

(73) Proprietor: **NGK INSULATORS, LTD.**
**2-56, Suda-cho, Mizuho-ku**
**Nagoya-shi, Aichi 467 (JP)**

(72) Inventor: **Kato, Kiminari**
**1-2, Azadenjiyama Narumi-cho**
**Midori-ku Nagoya City (JP)**

(74) Representative: **Whalley, Kevin et al**
**Marks & Clerk 57/60 Lincoln's Inn Fields**
**London WC2A 3LS (GB)**

(54) Ceramic rotor.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a ceramic rotor of unitary structure, which ceramic rotor has a blade-holding portion with excellent mechanical properties at high temperature and blade portions with excellent heat resistivity, the blade portions being integrally cemented to the blade-holding portion by sintering.

In recent years, to meet the need of energy saving research efforts have been made to improve the efficiency of turbines and engines by raising the running temperature thereof. In order to run the turbines and engines at a temperature higher than 1,100°C, the engine rotor or turbine rotor is required to have excellent heat resistivity. Furthermore, turbine rotors rotate at high speeds such as 50,000 to 160,000 RPM (revolutions per minute) and experience high tensile stress at high temperatures, so that large forces are applied especially to blade-holding portions of the rotors. Thus, the material of the rotors for high-temperature running is required to have excellent high-temperature strength. Conventionally, nickel- or cobalt-base heat-resisting metals have been used to make heat-resisting turbine rotors, but such conventional heat-resisting metals do not endure temperatures in excess of 1,100°C for a long period of time. Also such metals are very expensive due to limited resources of nickel and cobalt. To replace the expensive heat-resisting metals, ceramic materials with excellent high-temperature properties such as silicon nitride ($Si_3N_4$) sialon (SiAlON), and silicon carbide (SiC) have been studied. For instance, turbine rotors may be made of ceramic materials by any one of the following three methods.

(1) A blade-holding portion having grooves on the outer surface thereof is made of silicon nitride by hot pressing. Blade portions of complicated three-dimensional shape are formed by injection molding of silicon powder, and the thus formed blade portions are transformed into silicon nitride blade portions of reaction-sintered type by nitriding and sintering. The silicon nitride blade portions of reaction-sintered type are fitted in the grooves of the silicon nitride blade-holding portion one by one, and the blade portions and the blade-holding portion are integrally secured by either hot pressing or hot isostatic pressing.

(2) Metallic silicon is poured between those surfaces of the aforesaid grooves of the silicon nitride blade-holding portion made by hot pressing and the aforesaid silicon nitride blade portions of reaction-sintered type which are to be secured, so that intermediate layers are formed between the surfaces of the blade portions and the blade-holding portion being secured. Then, the thus assembled blade portions, blade-holding portion, and the intermediate layers are subjected to nitriding and sintering, so that the metallic silicon of the intermediate layers is transformed into silicon nitride and the blade portions are integrally secured to the blade-holding portion.

(3) Blade portions and a blade-holding portion are integrally formed by injection molding of a ceramic material such as silicon nitride, silicon carbide, and metallic silicon. The integral body thus molded is sintered either in an inert gas atmosphere in the case of silicon nitride and silicon carbide, or in a nitrogen gas atmosphere in the case of the metallic silicon.

However, these three methods have shortcomings: namely, the method (1) is not suitable for mass production and very costly because special facilities for the hot pressing are required to produce the blade-holding portion and to secure the blade portions to the blade-holding portion; the method (2) is costly due to the need for hot pressing in producing the blade-holding portion and tends to result in an insufficient strength of the secured surfaces due to the securing of different materials, i.e. hot pressed silicon nitride and the reaction-sintered silicon nitride; and in the method (3) it is difficult to make dense and very strong blade-holding portions and when there is a large difference in thickness between the blade portions and the blade-holding portion, cracks are caused during binder removal treatment so that the yield is low and the method is costly in consequence.

US—A—3 854 189 describes a method of manufacturing a ceramic rotor comprising the steps of preparing a mixture of 95—99.5% ceramic powder and 5—0.5% densification aid, forming an outer blade ring as a single unit from silicon metal particles by slip casting followed by sintering and nitriding, forming a central hub portion by hot pressing the mixture in a graphite die system at a pressure of from 3000 psi to about 4000 psi such that the hub portion has a larger density after hot pressing than that of the outer blade ring after slip casting, sintering and nitriding, and bonding the outer blade ring and the hub portion by applying heat and pressure to produce a ceramic rotor of unitary structure in which the outer blade ring is joined to the hub portion by a bonded surface.

US—A—4 156 051 describes a method of producing articles of complicated shape such as a turbine rotor from ceramic material in which the ceramic is preliminary sintered to form constituent members which are then hot pressed together to form the final shape.

JP—A—55 125 302, corresponding to Japanese patent abstract, vol. 4, No. 176, 5 December 1980 (M-45) (658), describes a method of manufacturing a ceramic rotor in which a silicon nitride shaft is coupled to a silicon nitride wheel portion by means of sintered silicon nitride cement.

Therefore, an object of the present invention is to obviate the aforesaid disadvantages of the prior art by providing an improved inexpensive ceramic rotor made of ceramics sintered at atmospheric pressure.

The present invention provides a ceramic rotor of unitary structure, comprising integrally formed blade portions made of sintered ceramic material, a blade-holding portion made of ceramic material having a density which is larger than that of the blade portions, the blade portions being bonded to the blade-holding portion. The above objects are achieved thanks to the fact that the blade portions (2) and the blade-holding portion (1) are made by sintering at atmospheric pressure, the blade portions (2) are cemented to the blade-holding portion by ceramic material and the blade portions having front surfaces defining a first plane and rear surfaces defining a second plane, the said second plane intersecting the central axis of the rotor at a first point and being spaced from the said first plane by a distance $d_3$ along the said central axis, the blade portions having inter-blade centre lines defining a curved surface surrounding the said central axis, a cemented surface between the blade portions and the blade-holding portion being located between the said curved surface and the said central axis such that a distance $d_1$ from an arbitrary point on the said cemented surface to the said first point along a straight line therebetween is less than the said distance $d_3$ but not less than a distance $d_2$ from the said arbitrary point on the said cemented surface to the said curved surface taken along the said straight line.

Such a ceramic rotor may be manufactured by a method comprising the steps of preparing at least one mixture of 100 parts of ceramic powder and 0.1 to 20 parts of sintering agent which is active during sintering at atmospheric pressure, forming blade portions of integral structure from the mixture by injection molding or casting, forming a blade-holding portion by casting the mixture in a metal mold and applying isotropic compression to the thus cast blade-holding portion so as to cause the blade-holding portion to have a larger density after sintering than that of the blade portions after sintering, applying ceramic paste to those surfaces of the blade portions and the blade-holding portion which are to be cemented, coupling the blade portions and the blade-holding portion at the pasted surfaces, and sintering the thus coupled blade portions and blade-holding portion at atmospheric pressure so as to produce a ceramic rotor of unitary structure. Preferably, those surfaces of the blade portions and the blade-holding portion which are to be cemented are treated by machining. Ceramic paste is applied to the surfaces to be cemented. Then, the blade portions and the blade-holding portion are cemented and sintered at atmospheric pressure to produce a ceramic motor of unitary structure.

The ceramic rotor of the invention can be used as a rotor of an engine turbocharger or a rotor of a gas turbine engine. In either case, the tensile stress caused at the blade-holding portion is considerably larger than that at the blade portions, so that the blade-holding portion is required to have a greater high-temperature strength than that required for the blade portions.

On the other hand, although the stress at the blade portions is smaller than that at the blade-holding portion, the blade portions are exposed to high-temperature gas passing therethrough so that the blade portions are required to have excellent heat resistances such as resistance against thermal shock and resistance against high temperature corrosion.

It is noted that when a ceramic rotor of the invention is used in a radial flow turbine, the blade-holding portion of the ceramic rotor acts as a shaft of the turbine.

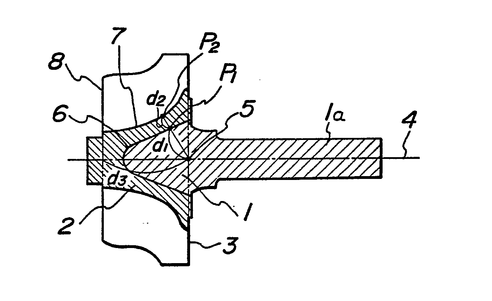

The invention will be further described, by way of example only with reference to the accompanying drawing, which is a schematic sectional view of a ceramic rotor according to the present invention, which ceramic rotor has a unitary structure with blade portions integrally cemented to a blade-holding portion thereof.

Referring to the drawing, a shaft portion 1a has a blade-holding portion 1 to which blade portions 2 are secured so as to form a ceramic rotor of unitary structure. Rear surfaces 3 of the blade portions 2 define a plane which intersects the central axis 4 of ceramic rotor at a point of intersection 5. The blade portions 2 are secured to the blade-holding portion 1 at a cemented surface 6. Inter-blade center lines of the blade portions 2 define a curved surface 7 surrounding the central axis 4 of the rotor. Front surfaces 8 of the blade portions 2 define another plane which is separated from the aforesaid plane defined by the rear surfaces 3 thereof.

The wall thickness $d_1$ of the blade-holding portion and the wall thickness $d_2$ of the blade portions are defined as follows. When a straight line through the point of intersection 5 intersects the surface 6 and the curved surface 7 at point $P_1$ and point $P_2$ respectively, the wall thickness $d_1$ of the blade-holding portion is the distance from the point of intersection 5 to the point $P_1$, while the wall thickness $d_2$ of the blade portions is the distance between the points $P_1$ and $P_2$. The distance between the planes defined by the front surfaces 8 and the rear surfaces 3 of the blade portions 2 is designated by $d_3$.

In the ceramic rotor according to the present invention, the wall thickness $d_1$ of the blade-holding portion is not less than the wall thickness $d_2$ of the blade portions, provided that the two wall thicknesses are taken along a common straight line, but the wall thickness $d_1$ of the blade-holding portion is less than the distance $d_3$ between the planes defined by the front and rear surfaces of the blade portions, namely $d_1 < d_3$ and $d_1 \geq d_2$.

The blade-holding portion 1 of the ceramic rotor is made of, for instance, silicon nitride ($Si_3N_4$) or silicon carbide (SiC) and has a density larger than the density of the blade portions 2 and a wall thickness which is larger than the wall thickness of the blade portions 2. In addition, the blade-holding portion 1 has a high strength at elevated temperatures. Accordingly, even when the ceramic rotor revolves at a high speed, the blade-holding portion 1 has sufficient strength to bear the large tensile stress applied thereto.

On the other hand, the blade portions 2 may have comparatively thin walls of complicated three-dimensional shape and are made of, for instance, silicon nitride, sialon (SiAlON), or silicon carbide. Although the blade portions 2 are exposed to higher temperatures than the blade-holding portion 1, the stress caused in the blade portions is comparatively small, so that blade portions with sufficient mechanical strength can be formed by injection molding or casting followed by sintering at atmospheric pressure. Furthermore, both the blade portions 2 and the blade-holding portion 1 are sintered at atmospheric pressure and have a density of more than 80% of theoretical density. Cementing paste to be used in the present invention has excellent high-temperature properties and preferably consists of materials similar to those of the blade portions 2 and the blade-holding portion 1, so that reactions at the cemented portions are fully effected and a very high strength is provided at the cemented portions.

In the ceramic rotor of the invention, the wall thickness $d_1$ of the blade-holding portion is not less than the wall thickness $d_2$ of the blade portions, so that the blade-holding portion 1 has sufficient strength to bear the large tensile stress caused during high-speed rotation of the ceramic rotor. When the blade portions 2 are cemented to the blade-holding portion 1 of the ceramic rotor of the present invention, if the blade-holding portion is pushed lightly from the rear side toward the front side of the blade portions, good cementing with a high strength can be achieved. However, if the wall thickness $d_1$ of the blade-holding portion becomes the same as or larger than the distance $d_3$ between the planes defined by the front surfaces 8 and the rear surfaces 3 of the blade portions 2, it becomes difficult to push the blade-holding portion toward the front side of the blade portions, so that the cementing between the blade portions and the blade-holding portion tends to become weak. In addition, if the front end of the blade-holding portion 1 projects out of the front surface of the blade portions 2, the cemented surface becomes susceptible to breakage from minute weak points when sudden thermal shock is applied thereto, and such weak points tend to provide starting points of corrosion caused by high-temperature gas.

A preferred method of manufacturing the ceramic rotor according to the present invention will be now described. At least one homogeneous mixture is prepared by mixing 100 parts of ceramic powder selected from silicon nitride, sialon, and silicon carbide, and 0.1 to 20 parts, preferably 1 to 10 parts, of at least one sintering agent to be active during sintering at atmospheric pressure, the sintering agent(s) being selected from magnesium oxide (MgO), beryllium oxide (BeO), cerium oxide ($CeO_2$), strontium oxide (SrO), boron carbide ($B_4C$), and carbon (C), and thoroughly agitating the ingredients. The blade portions of integral form are made either by adding 0.1 to 30%, more preferably 5 to 20% of plasticizer in the aforesaid mixture, the plasticizer being selected from resins such as polypropylene, polystyrene, polyethylene, and ethylene-vinyl acetate copolymer resin, and methyl cellulose, and wax, agitating the mixture after the addition, injection molding the agitated mixture, and binder-removing the molded body; or by preparing a slip by adding 0.01 to 5% of deflocculant and/or binder in the mixture, the deflocculant and/or binder being selected from various amines, sodium alginate, ammonium alginate, sodium polyacrylate, and sodium oxalate, and pouring the slip in a mold.

Separately, a blade-holding portion with a larger density and a greater wall thickness than those of the blade portions after being sintered is prepared by metal molding of the aforesaid mixture of ceramic powder and the sintering agents, and applying isotropic compression to the molded body by for example a rubber pressing process, and preferably treating the surfaces to be cemented by machining. Heat resisting paste, which is preferably made of similar materials as those of the blade portions and the blade-holding portion, is applied to those surfaces of the blade portions and the blade-holding portion which are to be cemented. The blade portions are cemented to the blade-holding portion, and the thus cemented blade portions and the blade-holding portion are then sintered at atmospheric pressure, and a ceramic rotor of unitary structure is obtained, which ceramic rotor has a density of 80% of theoretical density or more. In the ceramic rotor thus obtained, the blade-holding portion has a higher density and a greater wall thickness than those of the blade portions.

The strength of the portions between the blade portions and the blade-holding portion of the ceramic rotor can be improved by applying paste to various surfaces to be cemented, coupling the thus pasted surfaces, and applying cold isotropic compression to the portions being cemented through a rubber pressing process. The pressure to be used in the rubber pressing of the portions being cemented is preferably higher than each of the pressure for injection molding of the blade portions and the pressure for isotropic compression of the blade-holding portion. Although the best materials for the aforesaid ceramic paste are those which are the same as the materials of the blade portions and the blade-holding portion it is also possible to prepare the ceramic paste from ceramic powder having excellent high-temperature properties and a high reactivity with the materials of the blade portions and the blade-holding portion, such as glass or cordierite composition, the sintering agents for sintering at atmospheric pressure, e.g. magnesium oxide, beryllium oxide, cerium oxide, strontium oxide, boron carbide, and carbon, and a mixture of these materials. To further improve the strength of the cemented portions, it is effective to increase the contact areas between the blade portions and the blade-holding portion. Accordingly, it is preferable to calcine the shaped bodies of the blade portions and the blade-holding portion and to treat the surfaces to be cemented by machining, such as smoothing of the surfaces to be cemented by a lathe, so as to increase the contact areas.

The invention will be described with reference to the following illustrative examples.

Example 1

A mixture to be sintered at atmospheric pressure was prepared by mixing 100 parts of silicon nitride powder consisting essentially of α phase and having an average grain diameter of 0.3 μ and sintering agents consisting of 3 parts of magnesium oxide, 2 parts of strontium oxide, and 3 parts of cerium oxide, and thoroughly agitating the ingredients. Blade portions of a turbocharger were integrally formed by adding 15% of polypropylene resin to a part of the mixture thus prepared, and injection moulding the resin-added mixture. Separately, a shaft or a blade-holding portion of the turbocharger was formed by making a press material by adding 2% of polyvinyl alcohol to the remainder of the aforesaid mixture and thoroughly kneading, pressing the press material by a metal mold, applying isotropic compression to the thus prepared body by a rubber press, and machining one end of the body into a circular conical shape. Those surfaces of the thus formed blade portions and blade-holding portion which were to be cemented were smoothed by machining by a lathe.

Paste of silicon nitride powder for sintering at atmospheric pressure, which paste contained sintering agents consisting of 4.5 parts of magnesium oxide, 3 parts of strontium oxide, and 4.5 parts of cerium oxide, was applied to the thus smoothed surfaces. After coupling the blade portions to the shaft, the coupled body was airtightly enclosed by a rubber mold so as to apply isotropic compression thereto, and an integral shaped body with the blade portions strongly cemented to the blade-holding portion of the shaft was formed. The integral shaped body was sintered by heating at 1,700°C for one hour in a nitrogen atmosphere at atmospheric pressure, whereby a ceramic rotor of unitary structure made of silicon nitride sintered at atmospheric pressure was produced as shown in the accompanying drawing.

The blade portions of the thus produced ceramic rotor of the turbocharger had an average wall thickness of 5 mm, a density of 88% of theoretical density, and a four-point flexural strength of 51 kg/mm$^2$, while the blade-holding portion thereof had a minimum wall thickness of 10 mm, a density of 95% of theoretical density, and a four-point flexural strength of 63 kg/mm$^2$. The cemented portions of the thus produced ceramic rotor had a strength of 50 kg/mm$^2$.

Example 2

A mixture to be sintered at atmospheric pressure was prepared by adding sintering agents to silicon carbide powder consisting essentially of β phase and having an average grain diameter of 0.2 μ, the sintering agents consisting of 2.5% of boron carbide and 2% of carbon, and thoroughly agitating the mixture. A slip was made by adding 0.5% of sodium alginate to a part of the aforesaid mixture thus prepared, and blade portions of a turbocharger were integrally formed by pouring the slip into a mold. Separately, a shaft or a blade-holding portion of the turbocharger was formed by making a press material by adding 2.5% of polyvinyl alcohol into the remainder of the aforesaid mixture and thoroughly kneading, pressing the press material by a metal mold, and applying isotropic compression to the thus pressed body by a rubber press.

Those surfaces of the thus formed blade portions and shaft which were to be cemented were machined by a lathe into mating circular truncated conical shapes, and a paste of silicon carbide powder containing sintering agents was applied to the thus machined surfaces. After coupling the blade portions to the shaft, the coupled body was airtightly enclosed by a rubber mold so as to apply isotropic compression thereto. The compression body was sintered at 2,050°C for 0.5 hour in an argon gas atmosphere at atmospheric pressure, whereby a ceramic motor of unitary structure made of silicon carbide sintered at atmospheric pressure was produced.

The blade portions of the thus produced ceramic rotor had an average wall thickness of 3 mm and a density of 91% of theoretical density, while the blade-holding portion thereof had a wall thickness of about 15 mm and a density of 94% of theoretical density. The ceramic rotor had four-point flexural strengths of 35 kg/mm$^2$ at the blade portions and 44 kg/mm$^2$ at the blade-holding portion.

As described in the foregoing, the present invention provides a ceramic rotor made of ceramic material sintered at atmospheric pressure, which ceramic rotor comprises a blade-holding portion having a large density and a large wall thickness and excellent high-temperature mechanical properties, and blade portions which may be of complicated three-dimensional shape having a smaller density and a smaller wall thickness than those of the blade-holding portion, the blade portions being cemented to the blade-holding portion by ceramic material. Accordingly, the ceramic rotor of the present invention is inexpensive as compared with conventional ceramic rotors and yet has excellent high-temperature properties.

Claims

1. A ceramic rotor of unitary structure, comprising integrally formed blade portions (2) made of sintered ceramic material and a blade-holding portion (1) made of ceramic material having a density which is larger than that of the blade portions, the blade portions being bonded to the blade-holding portion characterized in that the blade portions (2) and the blade-holding portion (1) are made by sintering at atmospheric pressure, the blade portions (2) are cemented to the blade-holding portion (1) by ceramic material, and the blade portions have front surfaces (8) defining a first plane and rear surfaces (3) defining a second plane, the said second plane intersecting the cental axis (4) of the rotor at a first point (5) and being spaced from the said first plane by a distance ($d_3$) along the said central axis, the blade portions having inter-blade center lines defining a curved surface (7) surrounding the said central axis, a cemented surface (6) between the blade portions and the blade-holding portion being located between the said curved surface and the said central axis such that a distance ($d_1$) from an arbitrary point ($P_1$) on the said cemented surface to the said first point (5) along a straight line therebetween is less than the said distance ($d_3$) but not less than a distance ($d_2$) from the said arbitrary point on the said cemented surface to the said curved surface taken along the said straight line.

2. A ceramic rotor as claimed in claim 1, characterized in that the blade portions are made of a material selected from silicon nitride and sialon (SiAlON), and in that the blade-holding portion is made of silicon nitride.

3. A ceramic rotor as claimed in claim 1, characterized in that the blade portions and the blade-holding portion are made of silicon carbide.

**Patentansprüche**

1. Keramischer Rotor mit einheitlichem Aufbau, umfassend integriert ausgebildete Schaufelabschnitte (2) aus gesintertem Keramikmaterial und einen Schaufelhalteabschnitt (1) aus keramischem Material mit einer Dichte, welche größer ist als die der Schaufelabschnitte, wobei die Schaufelabschnitte auf den Schaufelhalteabschnitt geklebt sind, dadurch gekennzeichnet, daß die Schaufelabschnitte (2) und der Schaufelhalteabschnitt (1) dadurch hergestellt sind, daß bei atmosphärischem Druck gesintert wird, wobei die Schaufelabschnitte (2) durch keramisches Material aus dem Schaufelhalteabschnitt (1) zementiert sind, und daß die Schaufelabschnitte Vorderflächen (8) haben, die eine erste Ebene bilden und hintere Flächen (3), welche eine zweite Ebene bilden, wobei die zweite Ebene die Mittelachse (4) des Rotors an einem ersten Punkt (5) schneidet und von der ersten Ebene in einem Abstand ($d_3$) entlang der Mittelachse liegt, daß die Schaufelabschnitte Zwischen-Schaufelmittellinien haben, die eine gekrümmte Fläche (7) bilden, welche die Mittelachse umgibt, daß eine zementierte Fläche (6) zwischen den Schaufelabschnitten und dem Schaufelhalteabschnitt zwischen der gekrümmten Fläche und der Mittelachse so angeordnet ist, daß ein Abstand ($d_1$) vom willkürlichen

Punkt ($P_1$) auf der zementierten Fläche zum genannten ersten Punkt (5) entlang einer geraden Linie dazwischen kleiner ist als der Abstand ($d_3$), jedoch nicht kleiner als der Abstand ($d_2$) von dem willkürlichen Punkt auf der zementierten Fläche zur gekrümmten Fläche, und zwar genommen entlang der genannten geraden Linie.

2. Keramischer Rotor nach Anspruch 1, dadurch gekennzeichnet, daß die Schaufelabschnitte aus einem Material hergestellt sind, welches ausgewählt ist aus Siliziumnitrid und Sialon (SiAlON), und daß der Schaufelhalteabschnitt aus Siliziumnitrid besteht.

3. Keramischer Rotor nach Anspruch 1, dadurch gekennzeichnet, daß die Schaufelabschnitte und der Schaufelhalteabschnitt aus Siliziumcarbid bestehen.

**Revendications**

1. Rotor en matière céramique de structure unitaire, comprenant des pales (2) formées d'un seul tenant et réalisée en une matière céramique frittée et une partie de support des pales (1) réalisée en une matière céramique ayant une densité qui est plus élevée que celle des pales, les pales étant liées à la partie de support des pales, caractérisé en ce que les pales (2) et la partie de support des pales (1) sont réalisées par un frittage à la pression atmosphérique, les pales (2) sont scellées à la partie de support des pales (1) par une matière céramique, et les pales ont des surfaces avant (8) définissant un premier plan et des surfaces arrière (3) définissant un second plan, ledit second plan coupant l'axe de symétrie (4) du rotor en un premier point (5) et étant éloigné dudit premier plan d'une distance ($d_3$) mesurée le long dudit axe de symétrie, les pales ayant des lignes centrales inter-pales qui définissent une surface incurvée (7) entourant ledit axe de symétrie, une surface scellée (6) entre les pales et la partie de support des pales étant disposée entre ladite surface incurvée et ledit axe de symétrie de telle manière qu'une distance ($d_1$) mesurée entre un point arbitraire ($P_1$) pris sur ladite surface scellée et ledit premier point (5), en suivant une ligne droite entre eux, soit inférieure à ladite distance ($d_3$) mais pas inférieure à une distance ($d_3$) mesurée entre ledit point arbitraire pris sur ladite surface scellée et ladite surface incurvée, en suivant ladite ligne droite.

2. Rotor en matière céramique tel que défini dans la revendication 1, caractérisé en ce que les pales sont réalisées en une matière choisie parmi le nitrure de silicium et le sialon (SiAlON) et en ce que la partie de support des pales est faite de nitrure de silicium.

3. Rotor en matière tel que défini dans la revendication 1, caractérisé en ce que les pales et la partie de support des pales sont faites de carbure de silicium.